# EUROPÄISCHE PATENTSCHRIFT

(11) **EP 1 478 902 B1**
(45) Veröffentlichungstag und Bekanntmachung des Hinweises auf die Patenterteilung: **24.05.2017**
(21) Anmeldenummer: 02774413.5
(22) Anmeldetag: 25.09.2002
(51) Int. Cl.: G01C 19/5747

(54) **DREHRATENSENSOR**
ROTATIONAL RATE SENSOR
CAPTEUR DE VITESSE DE ROTATION

(30) Priorität: 12.01.2002 DE 10200948; 16.08.2002 DE 10237411
(43) Veröffentlichungstag der Anmeldung: 24.11.2004
(73) Patentinhaber: ROBERT BOSCH GMBH, 70442 Stuttgart (DE)
(72) Erfinder: WILLIG, Rainer, 71732 Tamm (DE); FRANZ, Jochen, 72762 Reutlingen (DE); KUHLMANN, Burkhard, 31785 Hameln (DE); HAUER, Joerg, 72762 Reutlingen (DE); GOMEZ, Udo-Martin, 71229 Leonberg (DE); MAURER, Dieter, 72793 Pfullingen (DE); DOERING, Christian, 70563 Stuttgart (DE); BAUER, Wolfram, 72074 Tuebingen (DE); BISCHOF, Udo, 72827 Wannweil (DE); NEUL, Reinhard, 70567 Stuttgart (DE); CLASSEN, Johannes, 72764 Reutlingen (DE); LANG, Christoph, 72124 Pliezhausen (DE); FREY, Jens, 70794 Filderstadt (DE)
(86) Internationale Anmeldenummer: PCT/DE2002/003624
(87) Internationale Veröffentlichungsnummer: WO 2003/058167

(56) Entgegenhaltungen:
- WO-A-97/45699
- DE-A- 19 530 007
- US-A- 5 600 064
- US-A- 6 089 089
- US-B1- 6 230 563

## Beschreibung

### Stand der Technik

Die Erfindung geht aus von einem Drehratensensor nach der Gattung des Hauptanspruchs.

Es sind linearschwingende Vibrationsgyroskope allgemein bekannt. Bei diesen Drehratensensoren werden Teile der Sensorstruktur aktiv in eine Schwingung (Primärschwingung) in eine Richtung, d.h. in einer ersten Achse (x-Achse), versetzt, die parallel zu einer Substratoberfläche orientiert ist. Bei einer äußeren Drehrate um eine ausgezeichnete sensitive Achse werden Corioliskräfte auf die schwingenden Teile ausgeübt. Diese (periodisch mit der Frequenz der Primärschwingung veränderlichen) Corioliskräfte bewirken Schwingungen von Teilen der Sensorstruktur (Sekundärschwingung) ebenfalls parallel zur Substratoberfläche in einer zweiten Richtung bzw. zweiten Achse (y-Achse), die senkrecht zur x-Achse orientiert ist. An der Sensorstruktur sind Detektionsmittel angebracht, welche die Sekundärschwingung detektieren (Coriolis-Messeffekt).

### Vorteile der Erfindung

Bei der Auslegung der Drehratensensoren wird wie oben beschrieben per Design (durch Wahl geeigneter Symmetrien) ein ausgezeichnetes kartesisches Koordinatensystem *K*=(x,y) für die Primär- und Sekundärschwingung innerhalb der Substratebene vorgegeben. Die Massen- und Federverteilungen werden derart ausgelegt, dass die Hauptachsensysteme der Massen- und Federsteifigkeitstensoren für die Primär- und Sekundärschwingungen exakt mit *K* übereinstimmen.
Des weiteren wird bei der Ausführung der Detektionsmittel darauf geachtet, dass durch den Betrieb der Sensoren in der Primärschwingung (ohne äußere Drehrate) keine Signale an den Detektionsmitteln für den Coriolis-Effekt entstehen. Dazu werden die Detektionsmittel so ausgelegt, dass deren ausgezeichnetes Koordinatensystem *KD* ebenfalls mit dem Koordinatensystem der Mechanik *K* übereinstimmt, d.h. also ebenfalls gilt: *KD*=(x*,*y)*.* Bei solchen idealen Drehratensensoren entsteht somit keine Überkopplung der Primärschwingung in die Detektionseinrichtung für den Corioliseffekt. Eine derartige Überkopplung wird Quadratur genannt. Quadratursignale sind somit Signale an den Detektionsmitteln für den Corioliseffekt, die auch ohne Relativbewegung des Sensors gegenüber einem äußeren Inertialsystem vorhanden sind, wobei der Sensor in seiner Primärschwingung betrieben wird.

Die Quadratur führt zu periodischen mit der Frequenz der Primärschwingung modulierten Signalen an den Detektionsmitteln für den Corioliseffekt.

Der Grund für das Auftreten von Quadratursignalen ist, dass das Koordinatensystem der Sensorelementmechanik *K*=(x,y) nicht mit dem Koordinatensystem der Detektionsmittel *KD*=(x'*,*y') zusammenfällt, sondern beide Systeme leicht gegeneinander um einen Winkel theta verdreht sind.

Typische Ursachen für diese im allgemeinen geringe Verdrehung sind z.B. Asymmetrien an der Sensorstruktur aufgrund von Imperfektionen im Fertigungsprozess. Diese können sich durch asymmetrische Massenverteilungen oder auch asymmetrische Federsteifigkeiten äußern. Als Folge daraus stimmen die Hauptachsensysteme der Masse- bzw. Federsteifigkeitstensoren nicht mehr mit *KD* überein.

Das Auftreten von Quadratur ist nicht spezifisch für die bei den hier beschriebenen Drehratensensoren verwendete Silizium-Technologie mit einer Sensorstruktur aus epitaktisch aufgewachsenem Poly-Silizium. Auch bei Drehratensensoren aus einkristallinem Silizium-Material oder Quarz-Einkristallen treten aufgrund von Imperfektionen im Fertigungsprozess Quadratursignale auf.

Eine andere, für das Verständnis der Erfindung wichtige, Interpretation der Quadratursignale basiert auf einer störungstheoretischen Betrachtung:
Für kleine Verdrehungen der Koordinatensysteme kann man zunächst die Richtungen der Hauptachsensysteme als ungestört betrachten (*K*=*KD*). Die Quadratur wird in diesem Bild als geringe Kopplung zwischen den beiden wesentlichen Schwingmoden (Primär- und Sekundärschwingung) beschrieben. In diesem Bild führt die Quadratur während der Schwingung der Sensorstruktur im Primärmode auch ohne äußere Drehrate zu einer Anregung der Sekundärschwingung. Diese Bewegung wird an den Detektionsmitteln für den Corioliseffekt als Störsignal sichtbar.

Erfindungsgemäß wird, basierend auf der gezielten Einwirkung zeitlich periodisch variierender Kräfte, eine Reduktion bzw. Vermeidung von Quadratursignalen erreicht. Hierzu werden durch an geeigneten Teilen der Sensorstruktur angebrachte Elektrodenstrukturen durch gezieltes Anlegen von äußeren elektrischen Gleichspannungen zeitlich variierende (dynamische) elektrostatische Kräfte auf die Sensorstruktur ausgeübt. Insbesondere durch die geeignete Form der Elektrodenstrukturen (Quadraturkompensationsstrukturen) wird erreicht, dass während der Primärschwingung der Sensorstruktur zeitlich variierende Kräfte auf geeignete Teile innerhalb der Sensorstruktur einwirken. Diese Kräfte sind so orientiert, dass sie die Sekundärschwingung anregen, und somit an den Detektionsmitteln für den Corioliseffekt detektiert werden können. Durch die Höhe der elektrischen Spannung kann die Größe dieser Signale solange variiert werden, bis sie die im Sensorelement aufgrund von Imperfektionen vorhandenen Quadratursignale exakt kompensieren. Die Erfindung stellt somit ein dynamisches Verfahren zur Quadraturkompensation dar.
Die Wirkung der Quadraturkompensation beruht in dem erfindungsgemäßen Verfahren auf einer gezielt vorgenommenen Asymmetrie innerhalb der mechanischen Sensorstruktur.

Quadratur-Störsignale bei Drehratensensoren aufgrund von Fertigungsimperfektionen sind bekannt und werden bei Drehratensensoren unterschiedlichster Technologien angetroffen. Dabei sind gemäß dem Stand der Technik unterschiedliche Methoden zur Reduktion dieser Störsignale bekannt.

Ein erstes Verfahren gemäß dem Stand der Technik zur Unterdrückung der Quadratursignale macht sich die unterschiedliche Phasenlage von Drehraten- und Quadratursignal zu nutze. Die Coriolis-Kraft ist proportional zur Geschwindigkeit der Primärschwingung wohingegen die Quadratur proportional zur Auslenkung der Primärschwingung entsteht. Somit besteht eine Phasenverschiebung von 90° zwischen Drehraten- und Quadratursignal. An den Detektionsmitteln werden Quadratur- und Drehratensignale als mit der Frequenz der Primärschwingung amplitudenmodulierte Signale detektiert. Durch die Methode der Synchrondemodulation, wie sie z.B. in DE 197 26 006 oder auch in US 5672949 beschrieben wird, können zunächst die Signale wieder in das Basisband demoduliert werden. Zusätzlich kann durch geeignete Wahl der Phasenlage des Referenzsignals für die Demodulation das Quadratursignal unterdrückt werden.

Bei dieser Methode wird das Quadratursignal im Sensorelement selbst nicht beeinflusst. Des weiteren muss das Quadratursignal auch die primären Signalwandlungspfade an den Detektionsmitteln passieren, es kann erst relativ spät im Signalpfad elektronisch unterdrückt werden. Bei im Vergleich zum Drehratenmessbereich großen Quadratursignalen bedeutet dies drastisch erhöhte Anforderungen an den Dynamikbereich der ersten Signalwandlungsstufen und führt oftmals zu erhöhtem Sensorrauschen.

Eine zweites Verfahren gemäß dem Stand der Technik zur Reduktion der Quadratursignale ist das physikalische Auswuchten der mechanischen Sensorstrukturen. Im Gegensatz zum ersten Verfahren wird hierbei durch Nachbearbeiten der Sensorelemente direkt die Ursache der Quadratur behoben, so dass an den Detektionsmitteln keine Quadratursignale auftreten.
Bei feinmechanischen Drehratensensoren wird dies aktiv durch iterative mechanische Materialabtragung an unterschiedlichen Stellen im Sensorelement erreicht. Durch dieses Verfahren wird das Hauptachsensystem der Masse- oder Federsteifigkeitstensoren für Primär- und Sekundärschwingung derart modifiziert, dass die zunächst vorhandene Verdrehung des Koordinatensystems der Sensorelementmechanik *K* gegenüber dem Koordinatensystem der Detektionsmittel *KD* rückgängig gemacht wird.
Bei Drehratensensoren aus einkristallinem Quarzmaterial wird teilweise durch Lasertrimmung eine Materialabtragung an ausgezeichneten Stellen im Sensorelement vorgenommen. Auch hier wird der Masse- oder Federsteifigkeitstensor derart modifiziert, dass schlussendlich die Verdrehung von *K* gegenüber *KD* im wesentlichen rückgängig gemacht wird.
Auch bei mikromechanischen Drehratensensoren aus einkristallinem Silizium wird die Lasertrimmung an Massestrukturen verwendet (z.B. VSG bzw. CRS-03 von Silicon Sensing Systems Ltd.). Weiterhin ist allgemein bekannt, für allgemeine Stimmgabel-Drehratensensoren die Lasertrimmung an ausgezeichneten Federstrukturen innerhalb der Sensorstruktur. Mit diesem Verfahren kann im Betrieb der Sensorelemente in der Primärschwingung gezielt das Hauptachsensystem des Federkonstantentensors solange modifiziert werden, bis *K* und *KD* übereinstimmen und somit das Quadratursignal eliminiert ist. Die hier beschriebenen Verfahren eliminieren die Quadratur im Sensorelement selbst und sind daher bezüglich Sensorperformance dem ersten Verfahren überlegen. Jedoch stellt das Auswuchten einen aufwendigen und oftmals iterativen sowie langwierigen und damit sehr kostenintensiven Prozess dar.

Gemäß eines weiteren allgemein bekannten Verfahrens gemäß dem Stand der Technik wird eine elektronische Quadraturkompensation in kapazitiven mikromechanischen Drehratensensoren durchgeführt. Hierbei wird die Unterdrückung des Quadratursignals durch gezielte Injektion eines elektrischen Signals in die elektronische Wandlereinheit an den Detektionsmitteln für den Coriolis-Effekt erzielt. Hierbei wird die Größe des Signals so gewählt, dass es das durch die Quadratur erzeugte Signal an den Detektionsmitteln genau kompensiert.
Auch bei dieser Methode (analog zum ersten Verfahren gemäß dem Stand der Technik) wird die mechanische Ursache für das Quadratursignal selbst nicht eliminiert. Im Gegensatz zur ersten Methode wird jedoch hier das Quadratursignal noch vor der primären Signalwandlung unterdrückt. Dies kann die Anforderungen an Dynamikbereich und Rauschen der primären Signalwandlung reduzieren.
Ein gravierender Nachteil der beschriebenen Methode ist jedoch, dass sie nur für eine ganz spezielle Auslegung der Sensor-Auswerteelektronik geeignet ist. Diese Auswertemethode (Basisbandauswertung) hat jedoch gravierende prinzipiell bedingte Nachteile (elektrisches Übersprechen, etc.) und kann daher für die in der vorliegenden Erfindung beschriebenen Drehratensensoren nicht angewendet werden.

In der US 6067858 wird ein weiteres Verfahren gemäß dem Stand der Technik zur elektronischen Quadraturkompensation in kapazitiven mikromechanischen Drehratensensoren diskutiert. Zwischen beweglichen Kammfingern und feststehenden Elektroden werden unterschiedliche elektrische Potenziale angelegt.Die US-B1-6 230 563 beschreibt einen Drehratensensor mit einem Substrat und einem Corioliselement, welches parallel zu einer ersten Achse (X-Richtung) zu Schwingungen angeregt wird. Eine Auslenkung des Elements aufgrund einer Corioliskraft erfolgt in einer zweiten, zur ersten Achse senkrechten Achse (Y-Richtung). Zur Kompensation von Quadraturfehlern wird eine konstante (offener Regelkreis) oder variable Bias-Spannung (geschlossener Regelkreis) an Kammstrukturen des Elements angelegt. Aus den US-A-6 089 089 und DE-A-195 30 007 sind ähnliche Drehratensensoren mit Quadraturkompensation bekannt.

Der erfindungsgemäße Drehratensensor mit den Merkmalen des unabhängigen Anspruchs 1 hat gegenüber dem Stand der Technik den Vorteil, dass durch ein spezielles Verfahren, basierend auf der gezielten Einwirkung dynamischer Kräfte, eine Reduktion der Quadratursignale erreicht wird. Dabei werden durch an geeigneten Teilen der Sensorstruktur angebrachte Elektrodenstrukturen durch gezieltes Anlegen von äußeren elektrischen Gleichspannungen entweder nur zeitlich veränderliche (dynamische) oder aber zeitlich veränderliche (dynamische) und zeitlich konstante (statische) elektrostatische Kräfte auf die Sensorstruktur ausgeübt. Durch die geeignete Anbringung der Elektrodenstrukturen (Quadraturkompensationsstrukturen) wird erreicht, dass die Quadratur verringert bzw. kompensiert wird. Die Erfindung stellt somit ein Verfahren zur Quadraturkompensation mittels dynamischer und optional zusätzlich statischer Kräfte dar. Die Kräfte werden dabei durch an ausgezeichneten Teilen der Sensorstruktur angebrachten Elektrodenstrukturen erzeugt, dergestalt dass eine äußere elektrische Gleichspannung an fest gegenüber dem Substrat aufgehängten Elektroden gegenüber der beweglichen Sensorstruktur angelegt wird. Das erfindungsgemäße Verfahren wirkt ähnlich wie ein mechanisches Auswuchten der Sensorstruktur. Gegenüber dem physikalischen Auswuchten besitzt es jedoch den Vorteil, dass die Kompensation hier durch Anlegen einer äußeren Spannung (durch Abgleich) erfolgen und somit ein teurer Prozessschritt entfallen kann. Des Weiteren ist das Verfahren kompatibel mit allen denkbaren Sensor-Auswerteelektroniken.

### Zeichnung

Ein Ausführungsbeispiel der Erfindung ist in der Zeichnung dargestellt und in der nachfolgenden Beschreibung näher erläutert. Es zeigen
Figur 1 die Aufsicht auf ein Ausführungsbeispiel eines erfindungsgemäßen Drehratensensor in Grobansicht,
Figur 2 eine Teilstruktur einer ersten Ausführungsform eines erfindungsgemäßen Drehratensensors in Detailansicht,
Figur 3 eine Detailansicht von erfindungsgemäßen Kompensationsstrukturen der ersten Ausführungsform des erfindungsgemäßen Drehratensensors,
Figur 4 einen erfindungsgemäßen Drehratensensor in Detailansicht,
Figur 5 eine Teilstruktur einer zweiten Ausführungsform eines erfindungsgemäßen Drehratensensors in Detailansicht,
Figur 6 einen erfindungsgemäßen Drehratensensor gemäß einer dritten Ausführungsform in Detailansicht,
Figur 7 eine Detailansicht von erfindungsgemäßen Kompensationsstrukturen der dritten Ausführungsform,
Figur 8 einen erfindungsgemäßen Drehratensensor gemäß einer vierten Ausführungsform in Detailansicht,
Figur 9 eine Detailansicht von erfindungsgemäßen Kompensationsstrukturen der vierten Ausführungsform.

### Beschreibung des Ausführungsbeispiels

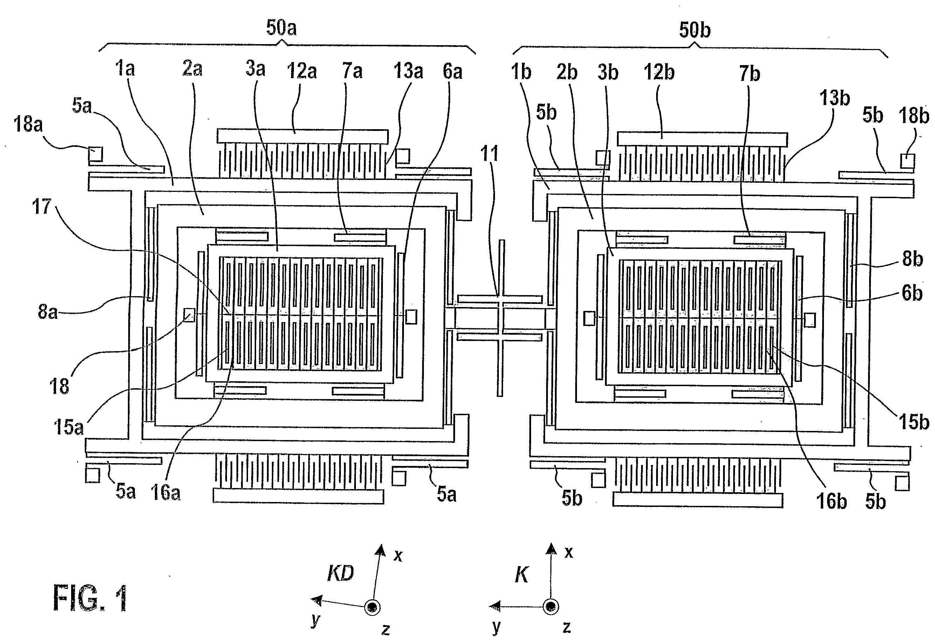

Im Nachfolgenden wird eine mögliche Ausführung des erfindungsgemäßen Verfahrens zur dynamischen Quadraturkompensation beispielhaft an einem mikromechanischen Drehratensensor dargestellt.
Das Verfahren kann auf eine spezielle Klasse von Drehratensensoren angewendet werden. Dabei handelt es sich um linearschwingende Vibrationsgyroskope. Im Folgenden wird ein Ausführungsbeispiel für die vorliegende Erfindung erläutert, wobei zunächst die für das Verständnis der Wirkungsweise der vorliegenden Erfindung wesentlichen funktionalen Bauteile des Drehratensensors anhand der Grobdarstellung von Fig. 1 kurz beschrieben werden.

Fig. 1 zeigt die Aufsicht auf die strukturierten Teile bzw. der Struktur eines Drehratensensors bzw. eines Drehraten-Sensorelements, wobei das unter der insbesondere mikromechanisch strukturierten Struktur des Drehratensensors liegende Substrat aus Gründen der Übersichtlichkeit nicht näher dargestellt ist.

Für das Substrat und die über dem Substrat angeordneten Sensorelemente wird als Material bevorzugt Silizium verwendet, welches durch entsprechende Dotierungen leitend ausgebildet ist. Das Substrat kann durch isolierende Schichten dort, wo es erforderlich ist, elektrisch isoliert werden. Es können aber auch andere Materialien wie Keramik, Glas oder Metalle für den erfindungsgemäßen Drehratensensor verwendet werden.

Der in Figur 1 dargestellte Drehratensensor ist erfindungsgemäß insbesondere zur Herstellung in reiner Oberflächenmikromechanik ausgelegt. Sensiert wird eine Drehung um die Substratnormale (z-Achse), d.h. eine Achse, die senkrecht auf der Substratoberfläche steht und die im folgenden auch als dritte Achse bezeichnet wird. Alle beweglichen Teile der Struktur sind erfindungsgemäß im wesentlichen vollständig ladungsleitend, d.h. elektrisch leitend.

Die Sensorstruktur umfaßt erfindungsgemäß insbesondere zwei bevorzugt symmetrisch ausgelegten Teilstrukturen, die im linken bzw. rechten Teil der Figur 1 dargestellt sind und mit den Bezugszeichen 50a und 50b bezeichnet sind. Erfindungsgemäß ist es jedoch auch möglich, dass die erfindungsgemäße Sensorstruktur lediglich eine solche Teilstruktur 50a umfaßt.

Jede der Teilstrukturen 50a, 50b umfaßt drei gegenüber dem Substrat, mit dem das Referenzkoordinatensystem verbunden ist, bewegliche Einzelmassen. Hierbei ist innerhalb der Teilstrukturen jeweils eine erste Masse als Antriebsmasse 1a,1b vorgesehen. Sie ist so mit Federn 5a, 5b mittels Verankerungsmitteln 18a, 18b am Substrat aufgehängt, dass die Antriebsmasse bevorzugt nur eine In-Plane-Bewegung (parallel zur Substratebene) in einer ersten Richtung bzw. gemäß einer ersten Achse (X-Achse) ausführen kann und eine In-Plane-Bewegung in einer zu der ersten Achse senkrechten zweiten Achse (Y-Achse) unterdrückt wird. Hierzu sind die Federn 18a, 18b in in x-Richtung weich und in y-Richtung steif. Die erste Achse wird auch Antriebsachse X genannt; die zweite Achse wird auch Detektionsachse Y genannt.
Innerhalb der Teilstrukturen 50a, 50b ist weiterhin eine dritte Masse, die im folgenden auch Detektionselement 3a,3b genannt wird, so mit Federn 6a, 6b gegenüber dem Substrat aufgehängt, dass diese bevorzugt eine In-Plane-Bewegung nur in der Detektionsrichtung Y ausführen kann und eine Bewegung in Antriebsrichtung X unterdrückt wird. Hierzu sind die Federn 6a, 6b in Y-Richtung weich und in X-Richtung steif.

Innerhalb der Teilstrukturen 50a, 50b ist jeweils eine zweite Masse als Corioliselement 2a, 2b mit der ersten Masse 1a, 1b und der dritten Masse 3a, 3b mit Federn 7a, 7b, 8a, 8b derart verbunden, dass das Corioliselement 2a, 2b gegenüber der Antriebsmasse 1a, 1b eine In-Plane-Relativbewegung bevorzugt nur in Detektionsrichtung ausführen kann und eine Relativbewegung in Antriebsrichtung unterdrückt wird, und dass das Corioliselement 2a, 2b gegenüber dem Detektionselement 3a, 3b eine In-Plane-Relativbewegung bevorzugt nur in x-Richtung ausführen kann und eine Relativbewegung in y-Richtung unterdrückt wird, derart, dass das Corioliselement 2a, 2b sowohl eine Bewegung in Antriebs- als auch in Detektionsrichtung ausführen kann. Hierzu sind die Federn 7a, 7b zwischen dem Corioliselement 2a, 2b und dem Detektionselement 3a, 3b in X-Richtung weich vorgesehen und in Y-Richtung steif vorgesehen. Die Federn 8a, 8b zwischen dem Corioliselement 2a, 2b und der Antriebsmasse 1a, 1b sind in y-Richtung weich vorgesehen und in x-Richtung steif vorgesehen.

Die Antriebmasse 1a, 1b, das Corioliselement 2a, 2b und das Detektionselement 3a, 3b werden im folgenden gemeinsam auch als bewegliche Sensorelemente 1a, 1b, 2a, 2b, 3a, 3b bezeichnet, da sie gegenüber dem Subtrat eine gewisse - durch die Federelemente eingeschränkte - Beweglichkeit aufweisen. Die Sensorelemente 1a, 1b, 2a, 2b, 3a, 3b sind erfindungsgemäß insbesondere als im wesentlichen rechteckige, rahmenförmige Strukturen vorgesehen, wobei das Corioliselement 2a, 2b, das Detektionselement 3a, 3b umgibt und wobei die Antriebsmasse 1a, 1b das Corioliselement 2a, 2b umgibt.

Bei einer erfindungsgemäßen Sensorstruktur mit zwei Teilstrukturen 50a, 50b sind beide Corioliselemente 2a,2b über Federn 11 so verbunden, dass eine direkte mechanische Kopplung beider Teilstrukturen 50a, 50b sowohl in Antriebs- als auch in Detektionsrichtung vorliegt, derart dass es zur Ausbildung von parallelen und antiparallelen Schwingungsmoden in x-Richtung (unter Beteiligung der Antriebsmassen 1a, 1b und der Corioliselemente 2a, 2b kommt (Nutzmoden Antrieb, Primärschwingung) und dass es zur Ausbildung von parallelen und antiparallelen In-Plane-Schwingungsmoden in y-Richtung (unter Beteiligung der Corioliselemente 2a, 2b und der Detektionselemente 3a, 3b) kommt (Nutzmoden Detektion, Sekundärschwingung).
Die Anregung bzw. der Antrieb der Struktur (Primärschwingung) erfolgt bevorzugt in der antiparallelen Antriebsmode (die erste Masse 1a der ersten Teilstruktur 50a bewegt sich gegenphasig zu der ersten Masse 1b der zweiten Teilstruktur 50b). Die bei einer äußeren Drehrate um die z-Achse auftretenden Coriolis-Beschleunigungen sind dann ebenfalls gegenphasig und führen bei geeigneter Auslegung der Strukturen zu einer Anregung der antiparallelen Detektionsmode (Sekundärschwingung). Der dadurch erzeugte erwünschte Messeffekt kann dann durch geeignete Auswertung direkt unterschieden werden von einem (unerwünschten) Messeffekt, hervorgerufen durch äußere Linearbeschleunigungen in y-Richtung, welche gleichphasig auf die Detektion beider Teilstrukturen wirken würden.

Die Anregung der Primärschwingung erfolgt über interdigitale Kammantriebe (Comb-Drives) an den Antriebsmassen 1a, 1b; ebenso die Detektion der Antriebsbewegung. Hierzu ist erfindungsgemäß eine erste Elektrode 12a, 12b und eine zweite Elektrode 13a, 13b vorgesehen, die die Primärschwingungen erzeugen. Die erste Elektrode 12a, 12b ist mit dem Substrat starr verbunden aber elektrisch isoliert vorgesehen. Die zweite Elektrode 13a, 13b ist mit der Antriebsmasse 1a, 1b mechanisch starr und elektrisch leitend verbunden. Die erste Elektrode 12a, 12b und die zweite Elektrode 13a, 13b greifen hierbei fingerartig ineinander und bilden so Kammstrukturen. Durch das Anlegen einer elektrischen Spannung zwischen den Elektroden ist es somit möglich, vom Substrat eine Kraft auf die Antriebsmasse 1a, 1b auszuüben.

Die Detektion der Coriolis-Beschleunigung erfolgt an Detektionsmitteln insbesondere in Form von dritten und vierten Elektroden innerhalb des Detektionselementes 3a, 3b. Das Detektionselement 3a, 3b ist dazu so ausgelegt, dass es die vierte Elektrode als den beweglichen Teil 16a, 16b einer Plattenkondensatoranordnung bildet. Als dritte Elektrode wird ein fester Teil 15a, 15b der Plattenkondensatoranordnung bezeichnet und ist mechanisch starr (aber elektrisch isoliert) mit dem Substrat verbunden. Dabei ist der feste Teil 15a, 15b als aufgespaltete Elektrode ausgelegt, so dass die gesamte Anordnung einen Differenz-Plattenkondensator bildet.

In der Sensorstruktur erfolgt die Detektion an einer ruhenden Struktur (Detektion "in Ruhe"). Dies besagt, dass das Detektionselement 3a, 3b und somit die bewegliche Elektrode 16a, 16b der Plattenkondensatoranordnung, im wesentlichen keine Antriebsbewegung ausführt. Durch die Aufteilung der Teilstrukturen 50a, 50b des Drehratensensors in Antriebsmasse 1a, 1b, Corioliselement 2a, 2b und Detektionselement 3a, 3b wird eine zweifache Entkopplung der Detektionsbewegung von der Antriebsbewegung erreicht.

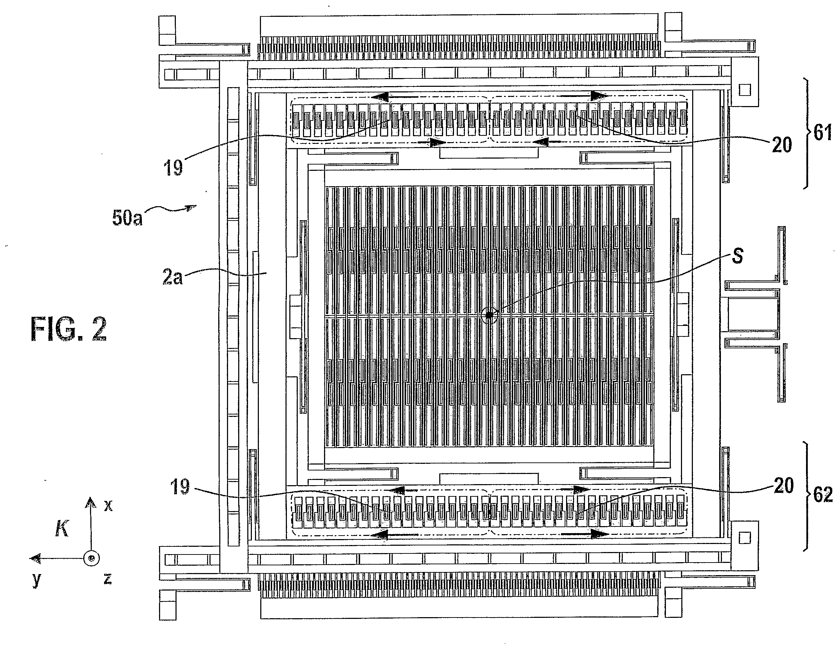

In Figur 2 ist die linke Teilstruktur 50a aus Figur 1 eines erfindungsgemäßen Drehratensensors in Detailansicht dargestellt. Aus Gründen der Übersichtlichkeit ist dabei nur eine Teilstruktur (links) des Sensorelements gezeichnet.

Bei der Auslegung der Drehratensensoren wird per Design (durch Wahl geeigneter Symmetrien) ein ausgezeichnetes kartesisches Koordinatensystem *K*=(x,y) für die Primär- und Sekundärschwingung innerhalb der Substratebene vorgegeben. Die Massen- und Federverteilungen sollten idealerweise derart ausgelegt werden, dass die Hauptachsensysteme der Massen- und Federsteifigkeitstensoren für die Primär- und Sekundärschwingungen exakt mit *K* übereinstimmen.
Des weiteren wird bei der Ausführung der Detektionsmittel darauf geachtet, dass durch den Betrieb der Sensoren in der Primärschwingung (ohne äußere Drehrate) keine Signale an den Detektionsmitteln für den Coriolis-Effekt entstehen. Dazu sollten die Detektionsmittel so ausgelegt werden, dass deren ausgezeichnetes Koordinatensystem *KD* ebenfalls mit dem Koordinatensystem der Mechanik *K* übereinstimmt, d.h. es gilt: *KD*=(x,y).

Wenn die Koordinatensysteme K und KD, beispielsweise wegen Fertigungsschwankungen, nicht vollständig übereinstimmen, kann es zu Quadratursignalen kommen.

Unterschieden wird zwischen positiven und negativen Quadratursignalen in Bezug zum Coriolis-Messeffekt: bei Bewegung der linken Teilstruktur 50a in Figur 2 in der Primärschwingung in positive x-Richtung und einer positiven äußeren Drehrate um die z-Achse wirkt die Coriolis-Beschleunigung in die negative y-Richtung. Ein positives Quadratursignal wirkt in dieselbe Richtung, ein negatives Quadratursignal in die entgegengesetzte Richtung.

Bei dem erfindungsgemäßen Drehratensensor werden durch an geeigneten Teilen - insbesondere dem Corioliselement 2a, 2b - der Sensorstruktur angebrachten Elektrodenstrukturen durch gezieltes Anlegen von äußeren elektrischen Gleichspannungen zeitlich veränderliche (dynamische) elektrostatische Kräfte - ggf. überlagert durch zeitlich konstante (statische) Kräfte - auf die Sensorstruktur ausgeübt. Durch die geeignete Anbringung dieser Elektrodenstrukturen, die im folgenden auch als Quadraturkompensationsstrukturen bzw. als Kompensationsstrukturen bezeichnet werden, wird erreicht, dass während der Primärschwingung der Sensorstruktur zeitlich variierende Kräfte auf geeignete Teile innerhalb der Sensorstruktur ausgeübt werden. Diese Kräfte sind so orientiert, dass sie die Sekundärschwingungen anregen und somit an den Detektionsmitteln für den Corioliseffekt detektiert werden können. Durch die Höhe der elektrischen Spannung kann die Größe dieser Signale solange detektiert werden, bis sie die im Sensorelement aufgrund von Imperfektionen der Sensorstruktur vorhandenen Quadratursignale exakt kompensieren. Die Erfindung stellt demzufolge ein dynamisches Verfahren zur Quadraturkompensation dar.

In Fig. 2 und den folgenden Figuren sind dynamische Quadraturkompensationsstrukturen 19, 20 beispielhaft innerhalb dem Corioliselement 2a dargestellt. Die Kompensationsstrukturen sind erfindungsgemäß in Form von zwei Unterstrukturen vorgesehen, wobei eine erste Unterstruktur 19 die positiven Quadratursignale kompensiert und wobei eine zweite Unterstruktur 20 die negativen Quadratursignale kompensiert. Solche zwei Unterstrukturen sind insbesondere deshalb sinnvoll, weil - da erfindungsgemäß über die verwendeten zeitlich variierenden elektrostatischen Kräfte insbesondere attraktive Kräfte ausgeübt werden - dann eine Drehung des Koordinatensystems K sowohl in positiver als auch in negativer Richtung bewirkt werden kann.

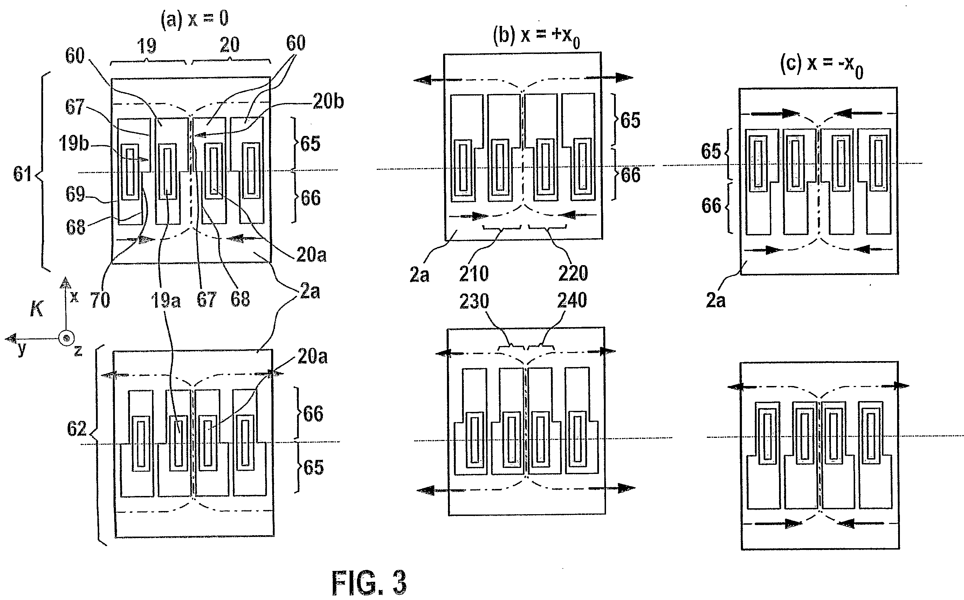

In Fig. 3 sind Detailansichten auf die Kompensationsstrukturen 19, 20 am Beispiel ihrer Realisierung am Corioliselement 2a dargestellt.

In Figur 2 und 3 sind speziell die Kompensationsstrukturen 19, 20 für ein erstes Ausführungsbeispiel des erfindungsgemäßen Drehratensensors in Detailansicht dargestellt. Beim ersten Ausführungsbeispiel unterscheiden sich die Kompensationsstrukturen 19, 20, je nach dem, ob sie sich auf einer ersten Seite des Corioliselements 2a - welche in Figur 2 im oberen Bereich der Figur dargestellt ist - befinden, oder ob sie sich auf einer zweiten Seite des Corioliselement 2a befinden. Die erste Seite ist in Figur 2 und 3 mit dem Bezugszeichen 61 bezeichnet und die zweite Seite ist in Figur 2 und 3 mit dem Bezugszeichen 62 bezeichnet.

Fig. 3a stellt die Kompensationsstrukturen 19, 20 mit dem Corioliselement 2a ohne Auslenkung des Corioliselements 2a aus seiner Gleichgewichtslage (d.h. die Verschiebung des Corioliselements 2a in X-Richtung verschwindet) dar, d.h. X = 0. Figur 3b stellt die Kompensationsstruktur 19, 20 mit dem Corioliselement 2a mit einer Auslenkung des Corioliselements 2a aus seiner Gleichgewichtslage in positiver X-Richtung dar, d.h. X = +Xo. Figur 3c stellt die Kompensationsstruktur 19, 20 mit dem Corioliselement 2a mit einer Auslenkung des Corioliselements 2a aus seiner Gleichgewichtslage in negativer X-Richtung dar, d.h. X = -Xo.
Jede der Unterstrukturen 19, 20 der Kompensationsstruktur ist erfindungsgemäß insbesondere als Kondensatoranordnung mit einer fünften Elektrode und einer sechsten Elektrode vorgesehen.
Aus dem Corioliselement 2a sind geeignete Bereiche 60 ausgeschnitten, die im folgenden auch als Ausschnitte 60 bezeichnet werden.

Erfindungsgemäß ist es bei allen Ausführungsformen des Drehratensensors vorgesehen, dass jeder Ausschnitt 60 in einem ersten Ausschnittsbereich 65 in Richtung der zweiten Achse (y) eine größere Ausdehnung aufweist als in einem zweiten Ausschnittsbereich 66. Die Ausschnittsbereiche 65, 66 sind erfindungsgemäß jeweils insbesondere rechteckig vorgesehen, wobei sie insbesondere so vorgesehen sind, dass eine Seite der Rechtecke der Ausschnittsbereiche 65, 66 gleich lang vorgesehen ist und dass die andere Seite der Rechtecke der Ausschnittsbereiche 65, 66 unterschiedlich lang vorgesehen ist. Die Ausschnittsbereiche 65, 66 sind erfindungsgemäß insbesondere so angeordnet, dass die gleich langen Seiten zweiter Ausschnittsbereiche 65, 66 parallel und insbesondere entlang der ersten Achse X verlaufen sowie in Richtung der ersten Achse X derart aneinander "anstoßen", d.h. in Richtung der X-Achse aneinander angrenzend angeordnet sind, dass sie zusammen den Ausschnitt 60 bilden.

Weiterhin bilden bei allen Ausführungsformen der Erfindung die Seitenwände der Ausschnitte 60 jeweils die sechste Elektrode 19b, 20b der elektrostatischen Kompensationsstruktur 19, 20. Entsprechend dem ersten Ausschnittsbereich 65 und dem zweiten Ausschnittsbereicht 66 eines Ausschnitts 60 ist die sechste Elektrode 19b, 20b in jedem der Ausschnitte zweigeteilt in eine erste Teilelektrode 67 und eine zweite Teilelektrode 68. Hierbei ist die erste Teilelektrode 67 als Seitenwand des ersten Ausschnittsbereichs 65 vorgesehen und die zweite Teilelektrode 68 ist als Seitenwand des zweiten Ausschnittsbereichs 66 vorgesehen. Erfindungsgemäß schließen die Ausschnittsbereiche 65, 66 in Richtung der ersten Achse aneinander an und bilden aufgrund ihrer unterschiedlichen Ausdehnung in Richtung der zweiten Achse Y auf einer ihrer Seiten parallel zur ersten Achse X eine gemeinsame Seitenwand 69 und auf der anderen ihrer Seiten eine abgestufte Seitenwand 70. In den Ausschnitten 60 sind als fünfte Elektroden mechanisch starr mit dem Substrat verankerte Gegenelektroden (Plattenkondensatorstrukturen) 19a, 20a vorgesehen. Die fünften Elektroden 19a, 20a sind erfindungsgemäß insbesondere als vom Substrat her in die Ausschnitte 60 hineinragende Platten mit insbesondere rechteckförmigem Querschnitt vorgesehen. Die fünften Elektroden 19a und die ebenfalls fünften Elektroden 20a sind erfindungsgemäß, insbesondere über Leiterbahnen unterhalb der beweglichen Strukturen des Drehratensensors, jeweils elektrisch miteinander verbunden - wobei jedoch die fünften Elektroden 19a von den fünften Elektroden 20a elektrisch isoliert vorgesehen sind - , jedoch elektrisch isoliert gegenüber dem Substrat ausgeführt, so dass an diese Elektroden 19a, 20a von außen gewünschte elektrische Potenziale gegenüber der beweglichen Sensorstruktur angelegt werden können.

Es sind erfindungsgemäß mehrere Anordnungsmöglichkeiten vorgesehen, die Ausschnittsbereiche 65, 66 zu einem Ausschnitt 60 aneinander angrenzend vorzusehen: Die erste Möglichkeit sieht vor, dass der erste Ausschnittsbereich 65 in positiver Richtung der ersten Achse X dem zweiten Ausschnitsbereich 66 folgt, wobei die gemeinsame Seitenwand 69 auf der Seite der positiven Y-Achse vorgesehen ist. Die erste Möglichkeit ist in Figur 3b mit dem Bezugszeichen 210 versehen. Die zweite Möglichkeit sieht vor, dass der erste Ausschnittsbereich 65 in positiver Richtung der ersten Achse X dem zweiten Ausschnitsbereich 66 folgt, wobei die gemeinsame Seitenwand 69 auf der Seite der negativen Y-Achse vorgesehen ist. Die zweite Möglichkeit ist in Figur 3b mit dem Bezugszeichen 220 versehen. Die dritte Möglichkeit sieht vor, dass der erste Ausschnittsbereich 65 in positiver Richtung der ersten Achse X dem zweiten Ausschnitsbereich 66 vorangeht, wobei die gemeinsame Seitenwand 69 auf der Seite der negativen Y-Achse vorgesehen ist. Die dritte Möglichkeit ist in Figur 3b mit dem Bezugszeichen 230 versehen. Die vierte Möglichkeit sieht vor, dass der erste Ausschnittsbereich 65 in positiver Richtung der ersten Achse X dem zweiten Ausschnitsbereich 66 vorangeht, wobei die gemeinsame Seitenwand 69 auf der Seite der positiven Y-Achse vorgesehen ist. Die vierte Möglichkeit ist in Figur 3b mit dem Bezugszeichen 240 versehen.

Weiterhin ist bei allen Ausführungsformen der Erfindung vorgesehen, die feststehenden fünften Elektroden (19a,20a) innerhalb der ausgeschnittenen Bereiche derart asymmetrisch vorzusehen, dass die fünften Elektroden (19a, 20a) im ersten Ausschnittsbereich 65 asymmetrisch vorgesehen sind. Dies bedeutet, dass die fünften Elektroden 19a, 20a im ersten Ausschnittsbereich 65 in Bezug auf die zweite Achse Y näher an einer der beiden Seitenwände 69, 70 des ersten Ausschnittsbereichs 65 vorgesehen ist als an der anderen der Seitenwände. In Bezug auf den zweiten Ausschnittsbereich sind die fünften Elektroden 19a, 20a im wesentlichen symmetrisch zu dem zweiten Ausschnittsbereich 66 vorgesehen.

Die Ausschnittsbereiche 65, 66 sind nun im ersten Ausführungsbeispiel derart vorgesehen, dass sie für die erste Kompensationsstruktur 19 der ersten Seite 61 des Corioliselements 2a gemäß der ersten Anordnungsmöglichkeit und für die zweite Kompensationsstruktur 20 der ersten Seite 61 des Corioliselements 2a gemäß der zweiten Anordnungsmöglichkeit angeordnet ist. Im ersten Ausführungsbeispiel ist weiterhin vorgesehen, dass die Ausschnittsbereiche 65, 66 für die erste Kompensationsstruktur 19 der zweiten Seite 62 des Corioliselements 2a gemäß der dritten Anordnungsmöglichkeit und für die zweite Kompensationsstruktur 20 der zweiten Seite 62 des Corioliselements 2a gemäß der vierten Anordnungsmöglichkeit angeordnet ist. In Ruhelage des Coriolislements 2a werden dadurch bei angelegten äußeren Quadraturkompensationsspannungen (elektrische Gleichspannungen) zwischen den fünften und sechsten Elektroden 19a, 20a, 19b, 20b statische Kräfte auf das Corioliselement 2a in y-Richtung ausgeübt. Die Größe dieser Kräfte kann erfindungsgemäß über die Gleichspannung zwischen den fünften und sechsten Elektroden insbesondere kontinuierlich verändert werden. Die Richtung der Kräfte ist durch die Asymmetrie der Anordnung vorgegeben. Diese statischen Kräfte bewirken bereits eine geringfügige statische Quadraturkompensation.

Hierbei ist die in Figur 3 dargestellte erste Unterstruktur 19 für die erste Seite 61 des Corioliselements 2a erfindungsgemäß in der Lage, Kräfte nach rechts auszuüben, was im oberen Teil der Figur 3a mit einem im Bereich einer zum Bezugszeichen 19 gehörenden geschweiften Klammer nach rechts weisenden kurzen Pfeil dargestellt ist. Die in Figur 3 dargestellte zweite Unterstruktur 20 der ersten Seite 61 des Corioliselements 2a ist erfindungsgemäß in der Lage, Kräfte nach links auszuüben, was im oberen Teil der Figur 3a mit einem im Bereich einer zum Bezugszeichen 20 gehörenden geschweiften Klammer nach links weisenden kurzen Pfeil dargestellt ist. Weiterhin ist die in Figur 3 dargestellte erste Unterstruktur 19 für die zweite Seite 62 des Corioliselements 2a erfindungsgemäß in der Lage, Kräfte nach links auszuüben, was im unteren Teil der Figur 3a mit einem im Bereich einer zum Bezugszeichen 19 gehörenden geschweiften Klammer nach links weisenden kurzen Pfeil dargestellt ist. Die in Figur 3 dargestellte zweite Unterstruktur 20 der zweiten Seite 62 des Corioliselements 2a ist erfindungsgemäß in der Lage, Kräfte nach rechts auszuüben, was im unteren Teil der Figur 3a mit einem im Bereich einer zum Bezugszeichen 20 gehörenden geschweiften Klammer nach rechts weisenden kurzen Pfeil dargestellt ist. Entsprechende Pfeile bei den anderen Figuren weisen auf die Kraftwirkung der statischen Kräfte hin.

Durch die geeignete Anordnung der Kompensationsstrukturen 19,20 wird erreicht, dass durch die statischen Kräfte auf das Corioliselement 2a ein Drehmoment um den in Figur 2 dargestellten und mit dem Bezugszeichen S bezeichneten Schwerpunkt der Teilstruktur erzeugt wird, jedoch kein linearer Kraftanteil in y-Richtung vorliegt.
Das Drehmoment auf das Corioliselement 2a führt allein durch die statischen Kräfte zu einer Verdrehung der Sensorstruktur und damit auch des Hauptachsensystems der Sensorelementmechanik *K* gegenüber dem Substrat. Dabei ist die Richtung der Verdrehung unterschiedlich für die erste und zweite Kompensationsstruktur 19, 20.
Durch diesen Effekt kann nun eine durch Fertigungsimperfektionen usw. vorgegebene Verdrehung zwischen dem Hauptachsensystem der Sensorelementmechanik *K* und dem Hauptachsensystem der Detektionsmittel *KD* teilweise rückgängig gemacht werden.

Kernpunkt der Erfindung ist jedoch der zusätzliche, aufgrund der mechanischen Asymmetrie innerhalb der Kompensationsstrukturen auftretende, dynamische Quadraturkompensationseffekt. Bei Bewegung des Sensorelements in der Primärschwingung mit der Amplitude Xo, was in den Figuren 3b und 3c dargestellt ist, ändern sich die überstrichenen Flächen zwischen fünften Elektroden 19a,20a und dem ersten bzw. zweiten Ausschnittsbereichs 65, 66 der Ausschnitte 60 des Corioliselements 2a. Daraus resultieren ebenfalls sich periodisch ändernde resultierende Kräfte in y-Richtung, was durch in den Figuren 3b und 3c dargestellte lange Pfeile - im Gegensatz zu den oben genannten kurzen Pfeilen - dargestellt ist. Somit wird bei der ersten Anordnungsmöglichkeit der Ausschnittsbereiche 65, 66 - wie bei der ersten Kompensationsstruktur 19 auf der ersten Seite 61 dargestellt - bei einer Auslenkung des Corioliselements in positive X-Achse eine dynamische Kraft in positive Y-Achse (nach links) und bei einer Auslenkung des Coriolislements 2a in negative X-Achse eine dynamische Kraft in negative Y-Achse (nach rechts) erzeugt. Bei der zweiten Anordnungsmöglichkeit der Ausschnittsbereiche 65, 66 - wie bei der zweiten Kompensationsstruktur 20 auf der ersten Seite 61 dargestellt - wird bei einer Auslenkung des Corioliselements 2a in positive X-Achse eine dynamische Kraft in negative Y-Achse (nach rechts) und bei einer Auslenkung des Coriolislements 2a in negative X-Achse eine dynamische Kraft in positive Y-Achse (nach links) erzeugt. Bei der dritten Anordnungsmöglichkeit der Ausschnittsbereiche 65, 66 - wie bei der ersten Kompensationsstruktur 19 auf der zweiten Seite 62 dargestellt - wird bei einer Auslenkung des Corioliselements in positive X-Achse eine dynamische Kraft in positive Y-Achse (nach links) und bei einer Auslenkung des Coriolislements 2a in negative X-Achse eine dynamische Kraft in negative Y-Achse (nach rechts) erzeugt. Bei der vierten Anordnungsmöglichkeit der Ausschnittsbereiche 65, 66 - wie bei der zweiten Kompensationsstruktur 20 auf der zweiten Seite 62 dargestellt - wird bei einer Auslenkung des Corioliselements 2a in positive X-Achse eine dynamische Kraft in negative Y-Achse (nach rechts) und bei einer Auslenkung des Coriolislements 2a in negative X-Achse eine dynamische Kraft in positive Y-Achse (nach links) erzeugt.

Die gesamte effektive Kraft auf das Corioliselement 2a setzt sich somit aus einem statischen Anteil - kurze Pfeile - und einem dynamischen Anteil - lange Pfeile - zusammen.

Durch geeignete Orientierung der Kompensationsstruktur wird erreicht, dass die resultierenden effektiven dynamischen Kraftbeiträge bezüglich positiver und negativer Kompensation in entgegengesetzte Richtungen weisen.
Der dynamische Kraftbeitrag ist direkt proportional zur Auslenkung der Sensorstruktur in der Primärschwingung und wirkt in y-Richtung. Er entspricht somit direkt einem Quadratursignal. Für positive bzw. negative Quadratursignale im Sensorelement würde somit an eine der zwei Kompensationsstrukturen eine elektrische Kompensationsspannung gegenüber der beweglichen Sensorstruktur angelegt werden.
Die Größe des dynamischen Kraftbeitrags und damit die Größe der Quadraturkompensation kann durch Variation der angelegten elektrischen Spannung erfolgen.

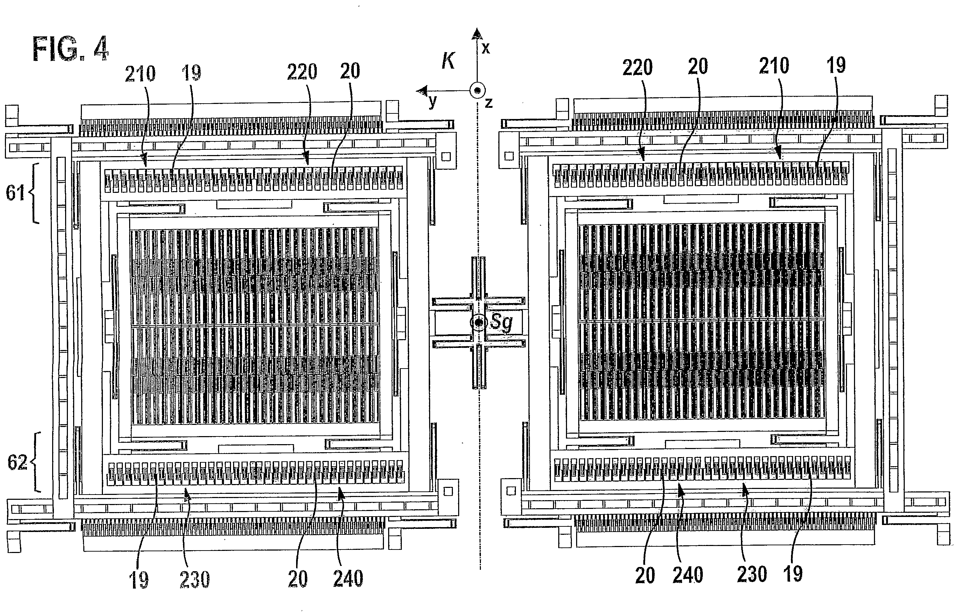

Die Anordnung der Kompensationsstruktur auf der zweiten Teilstruktur 50b des in Figur 1 dargestellten Drehratensensors wird durch eine Symmetrieoperation, beispielsweise Drehung um 180° um den Gesamtschwerpunkt Sg aus der ersten Teilstruktur 50b erzeugt. In Figur 4 sind die beiden Teilstrukturen 50a und 50b und der Gesamtschwerpunkt, der mit dem Bezugszeichen Sg bezeichnet ist, dargestellt. In Figur 4 ist weiterhin die erste Seite 61 und die zweite Seite 62 und die Verteilung der Kompensationsstrukturen 19, 20 auf die beiden Seiten 61, 62 dargestellt. Hieraus ergibt sich für die erste Teilstruktur 50a - wie im Zusammenhang mit Figur 3 beschrieben - für die erste Kompensationsstruktur 19 auf der ersten Seite 61 die erste Möglichkeit 210, für die zweite Kompensationsstruktur 20 auf der ersten Seite 61 die zweite Möglichkeit 220, für die erste Kompensationsstruktur 19 auf der zweiten Seite 62 die dritte Möglichkeit 230 und für die zweite Kompensationsstruktur 20 auf der zweiten Seite 62 die vierte Möglichkeit 240. Für die zweite Teilstruktur 50b ergibt sich für das Beispiel der Drehung um 180° als Symmetrieoperation die gleiche Zuordnung von Kompensationsstrukturen 19, 20 und Möglichkeiten 210, 220, 230, 240 mit dem Unterschied, dass auf beiden Seiten 61, 62 die erste Kompensationsstruktur 19 nicht wie bei der ersten Teilstruktur 50a links (positive Y-Richtung) von der zweiten Kompensationsstruktur 20 vorgesehen ist, sondern rechts (negative Y-Richtung) davon.

Essenziell für die Wirkung der dynamischen Quadraturkompensation ist, dass die Kompensationsstruktur an Teilen der Sensorelemente angebracht ist, die sowohl an der Primär- als auch an der Sekundärschwingung beteiligt sind. Für die beispielhaft erläuterten Drehratensensoren ist dies nur das Corioliselement 2a,2b. Ein Anbringen der Kompensationsstrukturen 19, 20 an lediglich an einer der Schwingungen teilnehmenden Sensorelemente würde keinen dynamischen Kompensationseffekt bewirken.

Die erste Ausführungsform zeichnet sich dadurch aus, dass es zu einer Überlagerung von statischem und dynamischem Quadraturkompensationseffekt kommt und dass die Massenverteilung innerhalb des Corioliselements 2a, 2b an den Kompensationsstrukturen 19,20 weitgehend symmetrisch bleibt.

In Fig. 2 ist die Wirkung der statischen Kompensationskräfte näher erläutert. Durch die Anordnung der Kompensationsstrukturen 19,20 wird erreicht, dass durch die statischen Kräfte (kurze Pfeile) auf das Corioliselement 2a ein Drehmoment um den in Figur 2 mit dem Bezugzeichen S bezeichneten Schwerpunkt des Corioliselements 2a erzeugt wird, jedoch durch die statischen Kompensationskräfte kein linearer Kraftanteil in y-Richtung vorliegt. Erfindungsgemäß ist die Kraftwirkung durch die an die Kompensationsstrukturen 19, 20 angelegten Spannungen derart, dass eine Verdrehung des - im betrachteten Beispiel - Corioliselements 2a und damit auch eine Verdrehung des Hauptachsensystems des Corioliselements 2a gegenüber dem Substrat bewirkt wird. Es kommt - wenn sich das Corioliselement 2a in seiner Ruhelage in X-Richtung befindet - durch die Anordnungen der Unterstrukturen 19, 20 und durch Anlegen einer Spannung an der ersten Unterstruktur 19 zu einer Verdrehung des bzw. zu einem Drehmoment auf das Corioliselements 2a im Uhrzeigersinn in der Figur 2 und durch Anlegen einer Spannung an der zweiten Unterstruktur 20 zu einer Verdrehung des bzw. zu einem Drehmoment auf das Corioliselements 2a entgegen des Uhrzeigersinns in der Figur 2.

Die durch lange Pfeile dargestellten dynamischen Kraftbeiträge - die dann auftreten, wenn das Corioliselement 2a aus seiner Ruhelage in Bezug auf die X-Richtung ausgelenkt ist - verursachen eine lineare Kraftwirkung, die - bei in X-Richtung positiver Auslenkung des Corioliselements 2a - für die erste Kompensationsstruktur 19 in positive Y-Richtung orientiert ist und für die zweiten Kompensationsstruktur 20 in negative Y-Richtung orientiert ist.

Durch die Überlagerung der dynamischen und der statischen Kraftbeiträge ist es erfindungsgemäß vorteilhaft möglich eine Quadraturkompensation durchzuführen.

Im Folgenden werden weitere Ausführungsbeispiele für die Erfindung dargestellt, wobei insbesondere auf die Unterschiede zu dem bisher diskutierten Beispiel eingegangen wird.

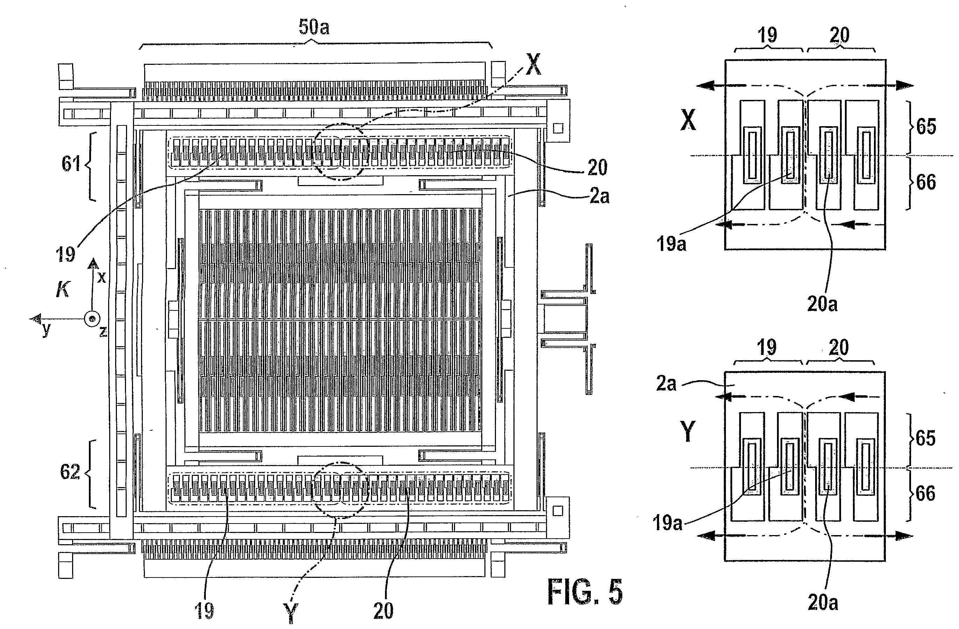

Das zweite Ausführungsbeispiel in Fig. 5 unterscheidet sich durch die geometrische Anordnung der ersten und zweiten Unterstrukturen 19, 20. In Figur 5 ist der Einfachheit halber wieder die erste Teilstruktur 50a eines erfindungsgemäßen Drehratensensors dargestellt. Auf der ersten Seite 61 des Corioliselements 2a sind im linken Teil (in Richtung der positiven Y-Achse) eine Anzahl von ersten Unterstrukturen 19 und im rechten Teil eine Anzahl von zweiten Unterstrukturen 20 vorgesehen. Auf der zweiten Seite 62 des Corioliselements 2a sind im linken Teil (in Richtung der positiven Y-Achse) eine Anzahl von ersten Unterstrukturen 19 und im rechten Teil eine Anzahl von zweiten Unterstrukturen 20 vorgesehen. Im zweiten Ausführungsbeispiel sind die ersten Unterstrukturen 19 sowohl auf der ersten Seite 61 als auch auf der zweiten Seite 62 gemäß der dritten Anordnungsmöglichkeit 230 vorgesehen. Im zweiten Ausführungsbeispiel sind die zweiten Unterstrukturen 20 sowohl auf der ersten Seite 61 als auch auf der zweiten Seite 62 gemäß der zweiten Anordnungsmöglichkeit 220 vorgesehen. Entsprechend sind die dynamische und die statische Kraftwirkungen wieder durch lange und kurze Pfeile in Figur 5 dargestellt und entsprechen dem bei Figur 3 Beschriebenen hinsichtlich der zweiten bwz. dritten Anordnungsmöglichkeit 220, 230 der Ausschnittsbereiche 65, 66. Durch die in Bezug auf das erste Ausführungsbeispiel geänderte Anordnung der Ausschnittsbereiche 65, 66 wird erreicht, dass in der Sensorruhelage, d.h. ohne Auslenkung in X-Richtung des Corioliselements kein resultierendes Drehmoment auf die Sensorstruktur einwirkt (kurze Pfeile in Fig. 5). Somit wird in dieser Anordnung keine statische Quadraturkompensation wirksam.

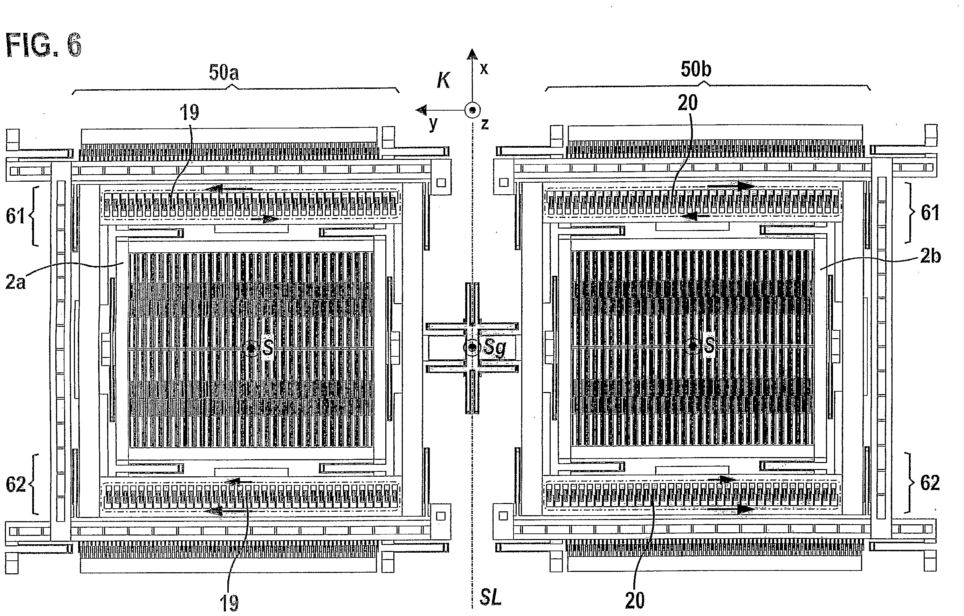

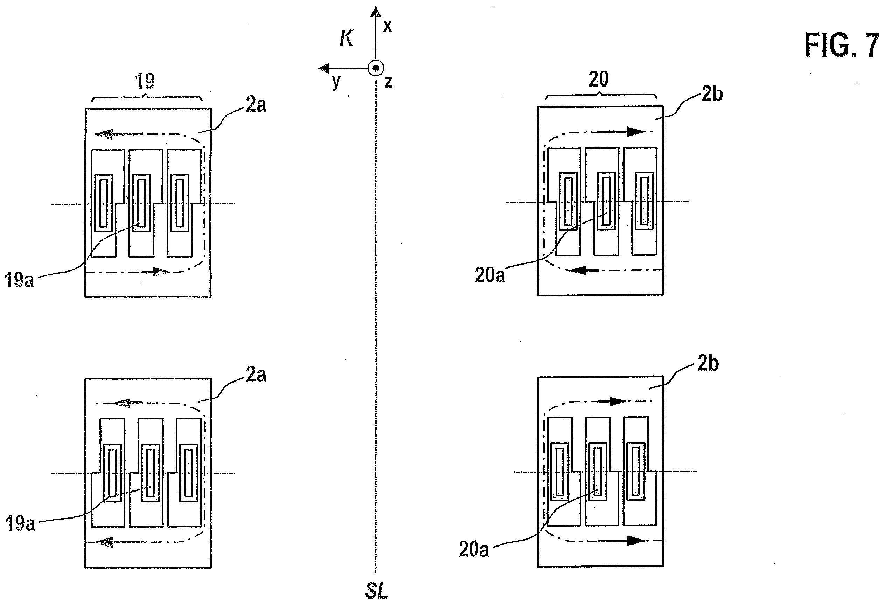

Die Kompensationsanordnung in Fig. 6 bzw. der Detailausschnitt in Fig. 7 zeigt eine dritte Ausführungsform der Erfindung und zeichnet sich dadurch aus, dass die Kompensationsstrukturen 19, 20 auf jeweils lediglich einer der Teilstrukturen 50a, 50b lokalisiert sind. Auf der ersten Teilstruktur 50a ist ausschließlich die erste Unterstruktur 19 lokalisiert und auf der zweiten Teilstruktur 50b ist ausschließlich die zweite Unterstruktur 20 lokalisiert. Die erste Unterstruktur 19 und die zweite Unterstruktur 20 sind wie im ersten Ausführungsbeispiel auf der erste Seite 61 und der zweiten Seite 62 unterschiedlich vorgesehen, nämlich: Für die erste Seite 61 und die erste Unterstruktur 19 die erste Anordnungsmöglichkeit 210, für die erste Seite 61 und die zweite Unterstruktur 20 die zweite Anordnungsmöglichkeit 220, für die zweite Seite 62 und die erste Unterstruktur 19 die dritte Anordnungsmöglichkeit 230 und für die zweite Seite 62 und die zweite Unterstruktur 20 die vierte Anordnungsmöglichkeit 240. Somit wird ebenfalls sowohl eine statische (Drehmoment) als auch dynamische Quadraturkompensation wirksam. Ein Vorteil der Anordnung in Fig. 6 ist die einfachere technologische Realisierbarkeit aufgrund der geringeren Anzahl von Leiterbahnen. Die Kompensationskräfte wirken - da in der Regel nur entweder die ersten oder die zweiten Unterstrukturen angesteuert werden - nur auf eine der Teilstrukturen 50a, 50b; aufgrund der aktiven mechanischen Kopplung beider Teilstrukturen 50a, 50b werden sie jedoch auch auf die jeweils andere Teilstruktur übertragen.
Die Anordnung der Kompensationsstruktur für negative Quadratur auf der zweiten Teilstruktur 50b (Fig. 6 und 7, rechts) kann durch eine Symmetrieoperation - insbesondere einer Spiegelung an der mit dem Bezugszeichen SL versehenen Symmetrielinie durch den mit dem Bezugszeichen Sg versehenen Gesamtschwerpunkt - aus der ersten Kompensationsstruktur für positive Quadratur auf der ersten Teilstruktur (Fig. 6 und 7, links) erzeugt werden.

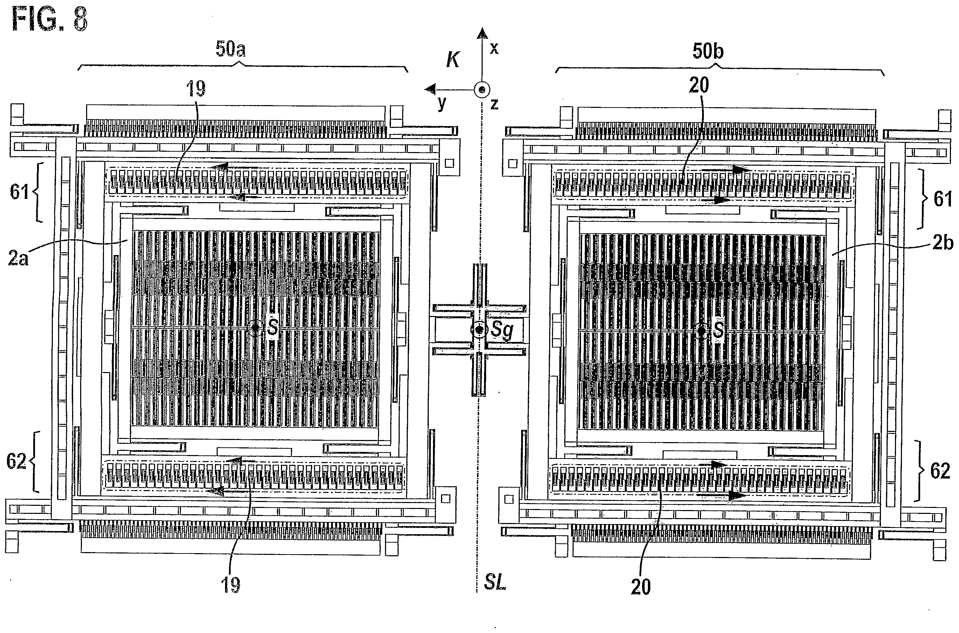

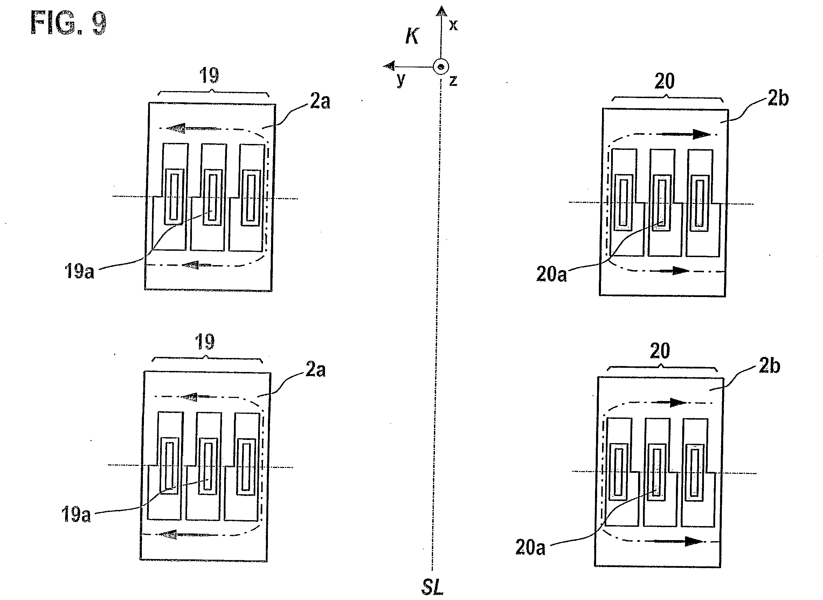

Der erfindungsgemäße Drehratensensor in Fig. 8 bzw. der Detailausschnitt in Fig. 9 gemäß einer vierten Ausführungsform unterscheidet sich wiederum durch die Orientierung der Ausschnittsbereiche 65, 66 der Kompensationsstrukturen 19, 20 innerhalb der Corioliselemente 2a bzw. 2b. Auch hier ist die erste Unterstruktur 19 bzw. die zweite Unterstruktur 20 auf jeweils lediglich einer der Teilstrukturen 50a, 50b (links. bzw. rechts) lokalisiert. Die erste Unterstruktur 19 ist für die erste Seite 61 und die zweite Seite 62 gleich vorgesehen. Die zweite Unterstruktur 20 ist für die erste Seite 61 und die zweite Seite 62 ebenfalls gleich vorgesehen. Für die erste Unterstruktur 19 ist die dritte Anordnungsmöglichkeit 230 der Ausschnittsbereiche 65, 66 vorgesehen. Für die zweite Unterstruktur 20 ist die vierte Anordnungsmöglichkeit 240 der Ausschnittsbereiche 65, 66 vorgesehen. Durch diese geänderte Orientierung wird erreicht, dass in der Sensorruhelage kein resultierendes Moment auf die Sensorstruktur einwirkt (kurze Pfeile in Fig. 8 und 9). Somit wird in dieser Anordnung keine statische Quadraturkompensation wirksam.
Auch hier kann die Anordnung der Kompensationsstruktur für negative Quadratur auf der zweiten Teilstruktur (Fig. 8 und 9, rechts) durch eine Symmetrieoperation (Spiegelung an der mit dem Bezugszeichen SL bezeichneten Symmetrielinie durch den mit dem Bezugszeichen Sg versehenen Gesamtschwerpunkt) aus der Kompensationsstruktur für positive Quadratur auf der ersten Teilstruktur (Fig. 8 und 9, links) erzeugt werden.

Die vorliegende Erfindung beschreibt Möglichkeiten zur Reduktion von Störsignalen in mikromechanischen Drehratensensoren mit den folgenden Vorteilen:
Es wird ein einfaches, zuverlässiges und kostengünstiges elektrostatisches Verfahren zur Quadraturkompensation (elektrischer Abgleich) im Gegensatz zu aufwendigen (iterativen) physikalischen Auswuchtverfahren vorgeschlagen.
Die Reduktion der Quadratur erfolgt im Sensorelement selbst. Somit tauchen an den Detektionsmitteln für den Coriolis-Effekt keine Quadratursignale auf, was deutlich reduzierte Anforderungen an die primäre Sensor-Signalauswertung bzw. verbesserte Sensorperformance zur Folge hat.
Das Verfahren beruht insbesondere auf der Wirkung dynamischer Kräfte. Dadurch wird im Vergleich zum rein statischen Kompensationsverfahren ein deutlich größerer Kompensationsbereich zugänglich.
Das Verfahren beruht auf der Verwendung geeigneter Asymmetrien innerhalb der mechanischen Sensorstrukturen. Somit kann die Kompensation durch ein einziges äußeres elektrisches Potenzial (Gleichspannung) erfolgen.
Die vorliegende Erfindung ist für ganze Klassen von Drehratensensoren, insbesondere Vibrationsgyroskope, deren Primär- und Sekundärschwingung innerhalb der Substratebene verläuft, einsetzbar. Weiterhin ist das Verfahren kompatibel mit unterschiedlichsten Sensor-Auswerteschaltungskonzepten.

## Patentansprüche

1. Drehratensensor mit einem Substrat und einem Coriolis-Element (2a, 2b), das über einer Oberfläche eines Substrats angeordnet ist, wobei das Coriolis-Element (2a, 2b) zu Schwingungen parallel zu einer ersten Achse (X) anregbar ist, wobei eine Auslenkung des Coriolis-Elements (2a, 2b) aufgrund einer Coriolis-Kraft in einer zweiten Achse (Y), die im wesentlichen senkrecht zu der ersten Achse (X) angeordnet ist, nachweisbar ist, wobei die erste und zweite Achse (X, Y) parallel zur Oberfläche des Substrats angeordnet sind, **dadurch gekennzeichnet, dass** kraftvermittelnde Mittel (19, 20) vorhanden sind, wobei die Mittel (19, 20) derart ausgestaltetet sind, dass eine dynamische Kraftwirkung zwischen dem Substrat und dem Corioliselement (2a, 2b) vermittelt wird, wobei die Mittel (19, 20) Kompensationsstrukturen mit einer ersten Unterstruktur (19) und einer zweiten Unterstruktur (20) besitzen, wobei die Unterstrukturen (19, 20) derart asymmetrisch ausgestaltet sind, dass für jede Unterstruktur wenigstens ein Ausschnitt (60) des Corioliselements (2a, 2b) vorgesehen ist, wobei der Ausschnitt (60) in einem ersten Ausschnittsbereich (65) in Richtung der zweiten Achse (y) eine größere Ausdehnung aufweist als in einem zweiten Ausschnittsbereich (66).

2. Drehratensensor nach Anspruch 1, **dadurch gekennzeichnet, dass** die Mittel (19, 20) derart ausgestaltet sind, dass sie ausschließlich die dynamische Kraftwirkung zwischen dem Substrat und dem Corioliselement (2a, 2b) vermitteln.

3. Drehratensensor nach Anspruch 1, **dadurch gekennzeichnet, dass** die Mittel (19, 20) derart ausgestaltet sind, zusätzlich zu der dynamischen Kraftwirkung eine statische Kraftwirkung zwischen dem Substrat und dem Corioliselement (2a, 2b) zu vermitteln.

4. Drehratensensor nach Anspruch 3, **dadurch gekennzeichnet, dass** die Mittel (19, 20) derart ausgestaltet sind, dass die statische Kraftwirkung einem Drehmoment bezüglich einer im wesentlichen senkrecht auf die Oberfläche des Substrats stehenden dritten Achse (Y) entspricht.

5. Drehratensensor nach einem der vorhergehenden Ansprüche, **dadurch gekennzeichnet, dass** zwei symmetrisch zueinander angeordnete Corioliselemente (2a, 2b) vorhanden sind, wobei eine, insbesondere mechanisch vorgesehene, Kopplung zwischen den Corioliselementen (2a, 2b) vorhanden ist.

6. Drehratensensor nach einem der vorhergehenden Ansprüche, **dadurch gekennzeichnet, dass** die dynamische und/oder statische Kraftwirkung von höchstens zwei Steuergrößen abhängt.

7. Drehratensensor nach Anspruch 6, **dadurch gekennzeichnet, dass** die Steuergrößen elektrische Gleichspannungen sind.

8. Drehratensensor nach einem der vorhergehenden Ansprüche, **dadurch gekennzeichnet, dass** Antriebsmittel (12a, 13a, 12b, 13b) vorhanden sind, durch die das Corioliselement (2a, 2b) zu Schwingungen parallel zu der ersten Achse (X) anregbar ist, und dass Detektionsmittel (15a, 16a, 15b, 16b, 17) vorhanden sind, durch die eine Auslenkung des Corioliselements (2a, 2b) aufgrund der Corioliskraft in der zweiten Achse (Y) nachweisbar ist.

## Claims

1. Rotational rate sensor having a substrate and a Coriolis element (2a, 2b) which is arranged above a surface of a substrate, the Coriolis element (2a, 2b) being able to be excited to vibrate parallel to a first axis (X), a deflection of the Coriolis element (2a, 2b) being able to be detected on the basis of a Coriolis force in a second axis (Y) arranged substantially perpendicular to the first axis (X), the first and second axes (X, Y) being arranged parallel to the surface of the substrate, **characterized in that** force-conveying means (19, 20) are present, the means (19, 20) being configured in such a manner that a dynamic action of force is conveyed between the substrate and the Coriolis element (2a, 2b), the means (19, 20) having compensation structures with a first substructure (19) and a second substructure (20), the substructures (19, 20) being configured to be asymmetrical in such a manner that at least one cutout (60) of the Coriolis element (2a, 2b) is provided for each substructure, the cutout (60) having a greater extent in a first cutout region (65) than in a second cutout region (66) in the direction of the second axis (Y).

2. Rotational rate sensor according to Claim 1, **characterized in that** the means (19, 20) are configured in such a manner that they convey only the dynamic action of force between the substrate and the Coriolis element (2a, 2b).

3. Rotational rate sensor according to Claim 1, **characterized in that** the means (19, 20) are configured in such a manner that, in addition to the dynamic action of force, they convey a static action of force between the substrate and the Coriolis element (2a, 2b).

4. Rotational rate sensor according to Claim 3, **characterized in that** the means (19, 20) are configured in such a manner that the static action of force corresponds to a torque with respect to a third axis (Y) substantially perpendicular to the surface of the substrate.

5. Rotational rate sensor according to one of the preceding claims, **characterized in that** two Coriolis elements (2a, 2b) which are arranged symmetrically with respect to one another are present, a coupling, in particular a mechanically provided coupling, being present between the Coriolis elements (2a, 2b).

6. Rotational rate sensor according to one of the preceding claims, **characterized in that** the dynamic and/or static action of force depends on at most two control variables.

7. Rotational rate sensor according to Claim 6, **characterized in that** the control variables are electrical DC voltages.

8. Rotational rate sensor according to one of the preceding claims, **characterized in that** drive means (12a, 13a, 12b, 13b) are present and can be used to excite the Coriolis element (2a, 2b) to vibrate parallel to the first axis (X), and **in that** detection means (15a, 16a, 15b, 16b, 17) are present and can be used to detect a deflection of the Coriolis element (2a, 2b) on account of the Coriolis force in the second axis (Y).

## Revendications

1. Capteur de vitesse de rotation comportant un substrat et un élément de Coriolis (2a, 2b) disposé sur une surface d'un substrat, dans lequel l'élément de Coriolis (2a, 2b) peut être excité en oscillation parallèlement à un premier axe (X), dans lequel une déviation de l'élément de Coriolis (2a, 2b) peut être mise en évidence sur la base d'une force de Coriolis suivant un deuxième axe (Y) qui est disposé sensiblement perpendiculairement au premier axe (X), dans lequel les premier et deuxième axes (X, Y) sont disposés parallèlement à la surface du substrat, **caractérisé en ce qu'**il est prévu des moyens (19, 20) de transmission de force, dans lequel les moyens (19, 20) sont conçus de manière à transmettre un effet de force dynamique entre le substrat et l'élément de Coriolis (2a, 2b),
dans lequel les moyens (19, 20) possèdent des structures de compensation ayant une première sous-structure (19) et une deuxième sous structure (20), dans lequel les sous-structures (19, 20) sont configurées de manière asymétrique afin que, pour chaque sou-structure, il soit prévu au moins une découpe (60) de l'élément de Coriolis (2a, 2b), dans lequel la découpe (60) présente un plus grand allongement dans une première région de découpe (65), dans la direction du deuxième axe (Y), que dans une deuxième zone de découpe (66).

2. Capteur de vitesse de rotation selon la revendication 1, **caractérisé en ce que** les moyens (19, 20) sont configurés de manière à transmettre exclusivement l'effet de force dynamique entre le substrat et l'élément de Coriolis (2a, 2b).

3. Capteur de vitesse de rotation selon la revendication 1, **caractérisé en ce que** les moyens (19, 20) sont configurés de manière à transmettre, en plus de l'effet de force dynamique, un effet de force statique entre le substrat et l'élément de Coriolis (2a, 2b).

4. Capteur de vitesse de rotation selon la revendication 3, **caractérisé en ce que** les moyens (19, 20) sont configurés de manière à ce que l'effet de force statique corresponde à un couple de rotation par rapport à un troisième axe (Y) disposé sensiblement perpendiculairement à la surface du substrat.

5. Capteur de vitesse de rotation selon l'une quelconque des revendications précédentes, **caractérisé en ce qu'**il est prévu deux éléments de Coriolis (2a, 2b) disposés symétriquement l'un par rapport à l'autre, dans lequel il est prévu un couplage, notamment réalisé de manière mécanique, entre les éléments de Coriolis (2a, 2b).

6. Capteur de vitesse de rotation selon l'une quelconque des revendications précédentes, **caractérisé en ce que** l'effet de force dynamique et/ou statique dépend d'au plus deux grandeurs de commande.

7. Capteur de vitesse de rotation selon la revendication 6, **caractérisé en ce que** les grandeurs de commande sont des tensions électriques continues.

8. Capteur de vitesse de rotation selon l'une quelconque des revendications précédentes, **caractérisé en ce qu'**il est prévu des moyens d'entraînement (12a, 13a, 12b, 13b) au moyen desquels l'élément de Coriolis (2a, 2b) peut être excité en oscillation parallèlement au premier axe (X), et **en ce qu'**il est prévu des moyens de détection (15a, 16a, 15b, 16b, 17) au moyen desquels une déviation de l'élément de Coriolis (2a, 2b) peut être mise en évidence sur la base de la force de Coriolis suivant le deuxième axe (Y).
